# EUROPEAN PATENT SPECIFICATION

(11) **EP 3 633 443 B1**
(45) Date of publication and mention of the grant of the patent: **05.07.2023**
(21) Application number: 18810410.3
(22) Date of filing: 30.05.2018
(51) Int. Cl.: G02F 1/1337, G02F 1/1335, G02F 1/1368, G02F 1/1343

(54) **LIQUID CRYSTAL DISPLAY DEVICE**
FLÜSSIGKRISTALLANZEIGEVORRICHTUNG
DISPOSITIF D'AFFICHAGE À CRISTAUX LIQUIDES

(30) Priority: 30.05.2017 JP 2017106235
(43) Date of publication of application: 08.04.2020
(73) Proprietor: Toppan Printing Co., Ltd., Taito-ku, Tokyo 110-0016 (JP)
(72) Inventor: NAKAMURA, Yayoi, Tokyo 1100016 (JP); YANAGISAWA, Masaki, Tokyo 1100016 (JP)
(74) Representative: TBK
(86) International application number: PCT/JP2018/020784
(87) International publication number: WO 2018/221600

(56) References cited:
- EP-A1- 2 500 768
- WO-A1-2011/058804
- CN-A- 101 738 808
- JP-A- 2003 279 958
- JP-A- 2010 191 283
- US-A1- 2016 377 936
- US-A1- 2016 377 936

## Description

### FIELD

The present invention relates to a liquid crystal display device.

### BACKGROUND

In alignment control of a liquid crystal display device, a VA (Vertical Alignment) mode is known. In a liquid crystal display device of the VA mode, rod-shaped liquid crystal molecules are substantially vertically aligned when no voltage is applied, and the liquid crystal molecules are substantially horizontally aligned when voltage is applied. In addition, there is known an MVA (Multi-domain Vertical Alignment) mode in which the VA mode is implemented by a multi-domain configuration in order to increase a viewing angle.

In the MVA mode, for example, protrusions are used for the alignment control of a liquid crystal layer. Due to a manufacturing process, there is a limit to miniaturization of protrusions, and, consequently, miniaturization of pixels becomes difficult. In addition, in the vicinity of a side surface of the protrusion, liquid crystal molecules are inclined along the side surface, and leakage of light occurs in this region. Due to the leakage of light, a contrast deteriorates. **In addition, document** US 2016/ 0 377 936 A1 **discloses a liquid crystal display, and document** EP 2 500 768 A1 **discloses a liquid crystal display device.**

### SUMMARY

### TECHNICAL PROBLEM

The present invention provides a liquid crystal display device which can improve a display characteristic.

### SOLUTION TO PROBLEM

According to an aspect of the present invention, there is provided a liquid crystal display device **according to claim 1.**

According to a **further** aspect of the present invention, there is provided a liquid crystal display device **according to a further independent claim. Further advantageous modifications thereof are defined in the dependent claims.**

### ADVANTAGEOUS EFFECTS

According to the present invention, a liquid crystal display device which can improve a display characteristic can be provided.

### BRIEF DESCRIPTION OF THE DRAWINGS

FIG. 1 is a plan view of a liquid crystal display device according to a first embodiment of the present invention.
FIG. 2 is a cross-sectional view of the liquid crystal display device along line A-A' in FIG. 1.
FIG. 3 is a plan view illustrating three pixels in an extracted manner.
FIG. 4 is a cross-sectional view of a pixel along line B-B' shown in FIG. 3.
FIG. 5 is a view for describing an operation of the liquid crystal display device in an OFF state.
FIG. 6 is a view for describing the operation of the liquid crystal display device in the OFF state.
FIG. 7 is a view for describing an operation of the liquid crystal display device in an ON state.
FIG. 8 is a view for describing the operation of the liquid crystal display device in the ON state.
FIG. 9 is a view for describing an operation of a liquid crystal display device according to a comparative example.
FIG. 10 is a view for describing the operation of the liquid crystal display device according to the comparative example.
FIG. 11 is a schematic view for describing a state of a display screen of the liquid crystal display device according to the comparative example.
FIG. 12 is a view for describing the operation of the liquid crystal display device according to the comparative example.
FIG. 13 is a view for describing the operation of the liquid crystal display device according to the comparative example.
FIG. 14 is a plan view of a liquid crystal display device according to a second embodiment of the present invention.
FIG. 15 is a plan view of a liquid crystal display device according to a third embodiment of the present invention.
FIG. 16 is a cross-sectional view of the liquid crystal display device along line A-A' in FIG. 15.

### DETAILED DESCRIPTION

A description will now be given of the embodiments with reference to the accompanying drawings. It should be noted that the drawings are schematic or conceptual, and the dimensions and scales of the drawings are not necessarily the same as the actual products. Where the same portion is depicted in different drawings, the dimensions and scale of one drawing may be different from those of another. Several embodiments described below merely show exemplary apparatuses and methods that implement the technical ideas of the present invention. The technical ideas are not limited by the element shapes, structures, arrangements etc. described below. In the description below, structural elements having substantially the same functions and configurations will be denoted by the same reference symbols, and a repetitive description of such elements will be given only where necessary.

### [First Embodiment]

### [1] Configuration of Liquid Crystal Display Device

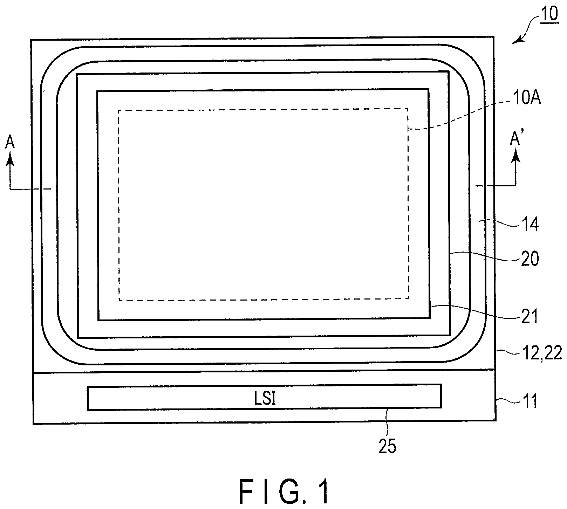

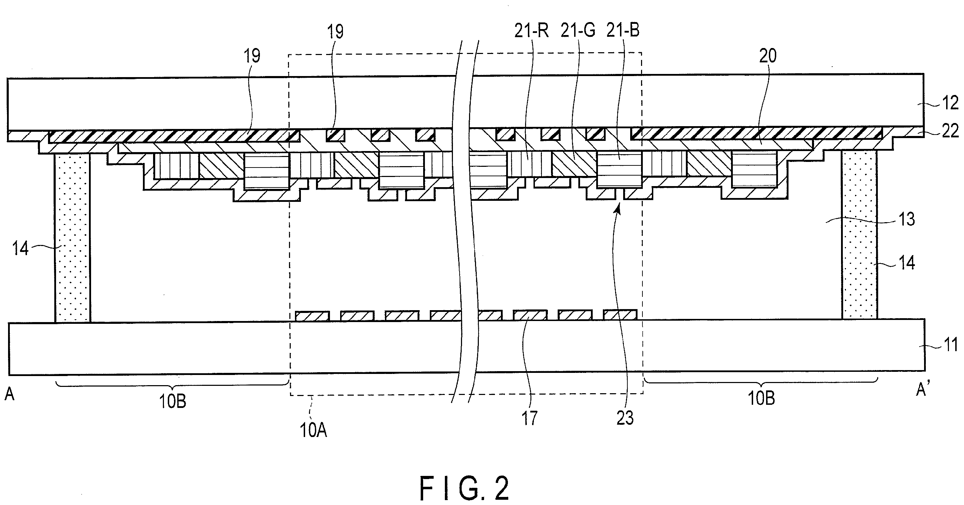

FIG. 1 is a plan view of a liquid crystal display device 10 according to a first embodiment of the present invention. FIG. 2 is a cross-sectional view of the liquid crystal display device 10 along line A-A' in FIG. 1.

The liquid crystal display device 10 includes a TFT substrate 11 on which switching elements (TFTs), pixel electrodes, and the like are formed, and a color filter substrate (CF substrate) 12 on which a color filter, a common electrode, and the like are formed and which is disposed to be opposed to the TFT substrate 11. Each of the TFT substrate 11 and CF substrate 12 is composed of a transparent substrate (e.g. a glass substrate, or a plastic substrate). The TFT substrate 11 is disposed to be opposed to a backlight (not illustrated), and illumination light from the backlight enters the liquid crystal display device 10 from the TFT substrate 11 side.

A liquid crystal layer 13 is filled between the TFT substrate 11 and CF substrate 12. Specifically, the liquid crystal layer 13 is sealed in a region surrounded by the TFT substrate 11, CF substrate 12 and a seal member 14. The seal member 14 is formed of, for example, an ultraviolet-curing resin, a thermosetting resin, an ultraviolet/thermal hybrid curing resin, or the like. In the manufacturing process, such a resin is coated on the TFT substrate 11 or CF substrate 12, and then the resin is cured by ultraviolet irradiation, heat, or the like.

A liquid crystal material, of which the liquid crystal layer 13 is composed, has optical characteristics which vary by an operation of the alignment of liquid crystal molecules according to an electric field that is applied between the TFT substrate 11 and CF substrate 12. The liquid crystal display device 10 of the present embodiment has a VA mode using a vertical-alignment (VA) liquid crystal. Specifically, a negative-type (N-type) nematic liquid crystal having a negative dielectric anisotropy is used as the liquid crystal layer 13, and liquid crystal molecules are aligned substantially vertical to a substrate surface when voltage (electric field) is not applied. The alignment of liquid crystal molecules of the VA mode is such that the major axes (director) of liquid crystal molecules are vertically aligned when no voltage is applied, and the major axes of liquid crystal molecules are inclined toward a horizontal direction when voltage is applied. Note that although the liquid crystal mode may be a homogeneous mode, the VA mode is optimal from the standpoint of an improvement of a contrast (white (maximum luminance)/black (minimum luminance)).

In the homogeneous mode, a positive-type (P-type) nematic liquid crystal having a positive dielectric anisotropy is used as the liquid crystal layer, and liquid crystal molecules are aligned substantially horizontal to a substrate surface when voltage (electric field) is not applied. In the homogeneous mode, the major axes (director) of liquid crystal molecules are substantially horizontally aligned when no voltage is applied, and the major axes of liquid crystal molecules are inclined toward a vertical direction when voltage is applied.

The liquid crystal display device 10 includes a display area (view area) 10A and a peripheral area 10B which surrounds the view area 10A. The view area 10A is an area where an image is displayed, and a plurality of pixels (pixel array) are disposed in the view area 10A. The peripheral area 10B is also called "frame". The peripheral area 10B is always visually recognized, for example, as black.

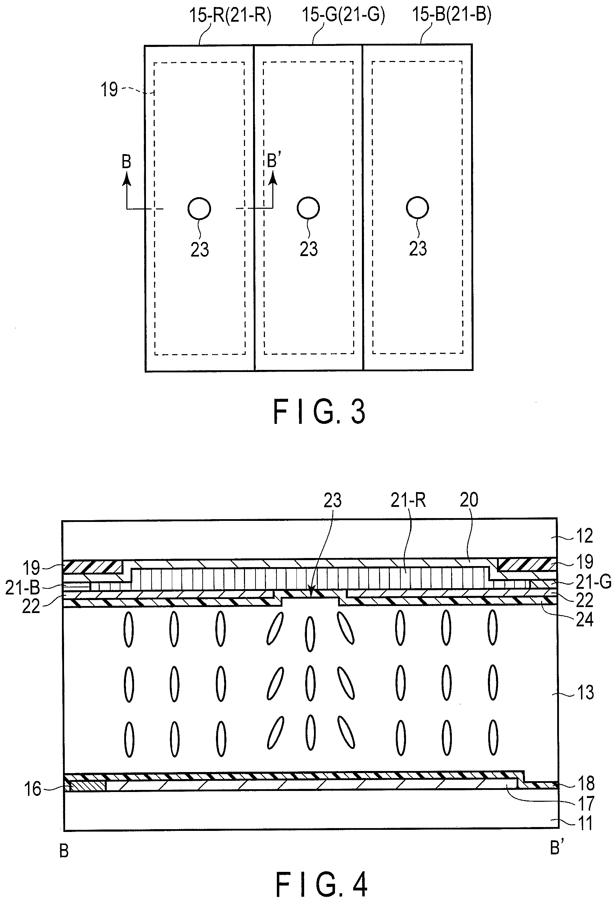

The liquid crystal display device 10 includes a plurality of pixels 15 which are arranged, for example, in a matrix. FIG. 3 is a plan view illustrating three pixels 15 in an extracted manner. FIG. 4 is a cross-sectional view of the pixel 15 along line B-B' shown in FIG. 3.

A general pixel is composed of red (R), green (G) and blue (B), which are the three primary colors of light. A set of three mutually neighboring colors of red, green and blue constitutes a unit (pixel) of display. A single-color portion of red, green or blue in one pixel is a minimum driving unit which is called "sub-pixel". FIG. 3 illustrates a red sub-pixel 15-R, a green sub-pixel 15-G and a blue sub-pixel 15-B. In the description in this specification, the sub-pixel is called "pixel", unless distinction between a pixel and a sub-pixel is particularly necessary. As the arrangement of pixels, a freely selected method, such as a stripe arrangement, a delta arrangement or a mosaic arrangement, can be used.

A plurality of switching elements (active elements) 16, the number of which corresponds to the number of pixels, are provided on the liquid crystal layer 13 side of the TFT substrate 11. As the switching element 16, for example, a TFT (Thin Film Transistor) is used, and an n-channel TFT is used. In FIG. 4, the TFT 16 is depicted as a rectangle in a simplified manner. The TFT 16 includes a gate electrode which is electrically connected to a scanning line; a gate insulating film provided on the gate electrode; a semiconductor layer provided on the gate insulating film; and a source electrode and a drain electrode which are provided on the semiconductor layer and spaced apart from each other. The source electrode is electrically connected to a signal line.

A plurality of pixel electrodes 17, the number of which corresponds to the number of pixels, are provided on the TFT substrate 11. The pixel electrode 17 is electrically connected to the TFT 16. The pixel electrode 17 has an area which is slightly less than the area of the pixel. The pixel electrode 17 is composed of a transparent electrode, and ITO (indium-tin-oxide), for example, is used.

An alignment film 18, which controls initial alignment of the liquid crystal layer 13, is provided on the TFT substrate 11, TFT 16 and pixel electrode 17. In FIG. 2, the depiction of the alignment film 18 is omitted.

Next, a configuration on the CF substrate 12 side is described. A black matrix for shielding (also referred to as "black mask" or "shielding film") 19 is provided on the liquid crystal layer 13 side of the CF substrate 12. The black matrix 19 is disposed at boundary portions between pixels, and is formed in a mesh-like pattern. The black matrix 19 has a function of shielding the TFTs 16, and a function of enhancing a contrast by blocking unnecessary light between color filters of different colors.

A first common electrode (lower common electrode) 20 is provided on the CF substrate 12 and black matrix 19. The first common electrode 20 is formed in a planar shape on the CF substrate 12, and has an area which is greater than at least the view area 10A. In the present embodiment, the first common electrode 20 has an area which is greater than the area of a color filter (to be described later) and is smaller than the area of a region inside the seal member 14. The first common electrode 20 is composed of a transparent electrode, and ITO, for example, is used.

A color filter 21 is provided on the first common electrode 20. The color filter 21 includes a plurality of color members, to be more specific, a plurality of red filters 21-R, a plurality of green filters 21-G, and a plurality of blue filters 21-B. The red filters 21-R constitute red sub-pixels 15-R, the green filters 21-G constitute green sub-pixels 15-G, and the blue filters 21-B constitute blue sub-pixels 15-B.

A second common electrode (upper common electrode) 22 is provided on the color filter 21. The second common electrode 22 has an area which is greater than at least the view area 10A. In the present embodiment, the second common electrode 22 has an area which is greater than the area of the color filter 21 and is equal to the area of the CF substrate 12. The second common electrode 22 is composed of a transparent electrode, and ITO, for example, is used.

In order to control the alignment of the liquid crystal layer 13, the second common electrode 22 is provided with a plurality of opening portions (holes) 23. The holes 23 are provided in association with the pixels 15 (i.e. pixel electrodes 17), respectively.

In the liquid crystal display device 10 of the present embodiment, a multi-domain (alignment division) method is applied, that is, an MVA (Multi-domain Vertical Alignment) mode is applied. In the MVA mode, one pixel is divided into a plurality of regions (domains), and the directions of inclination of liquid crystal molecules are varied between the regions. The holes 23 formed in the second common electrode 22 control the directions of inclination of liquid crystal molecules. Specifically, the liquid crystal molecules are inclined in a radial shape around the hole 23. By adopting the MVA mode, the viewing angle dependency can be greatly decreased, and the viewing angle can be increased.

The hole 23 is disposed near the center of the pixel 15 (or pixel electrode 17). The plan-view shape of the hole 23 is, for example, a circle. The plan-view shape of the hole 23 may be an ellipse, a rectangle, or a polygon other than a rectangle.

In the peripheral area 10B, the second common electrode 22 is in contact with the first common electrode 20, and is electrically connected to the first common electrode 20. Accordingly, the first common electrode 20 and the second common electrode 22 are set at an equal voltage.

An alignment film 24, which controls initial alignment of the liquid crystal layer 13, is provided on the second common electrode 22 and color filter 21. In FIG. 2, the depiction of the alignment film 24 is omitted.

A control circuit 25 is provided at an end portion of the TFT substrate 11. The control circuit 25 is composed of, for example, an LSI circuit (large-scale integrated circuit). The control circuit 25 is electrically connected to the scanning line and signal line, which are electrically connected to the TFT 16, and is electrically connected to the first common electrode 20 and second common electrode 22. By applying a plurality of voltages to the respective pixels 15, the control circuit 25 controls the operation of the pixels 15.

Although an illustration is omitted, the liquid crystal display device 10 includes a pair of polarizers (linear polarizers) and a pair of retardation plates (1/4 wave plates), in such a manner as to sandwich the TFT substrate 11 and CF substrate 12 from both sides.

### [2] Operation of Liquid Crystal Display Device 10

Next, an operation of the liquid crystal display device 10 with the above-described configuration will be described.

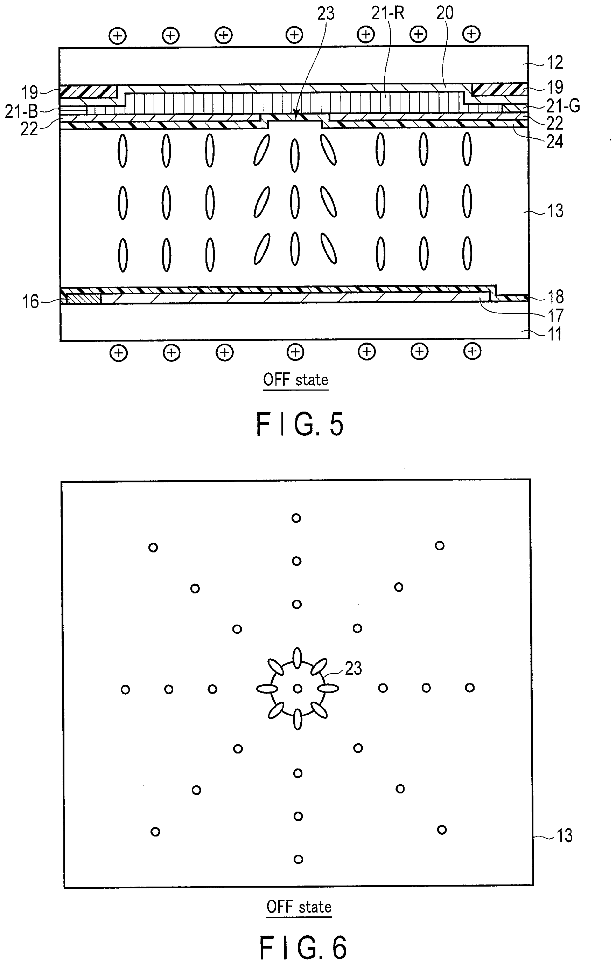

FIG. 5 and FIG. 6 are views for describing the operation of the liquid crystal display device 10 in an OFF state. FIG. 5 is a cross-sectional view illustrating one pixel 15 which is extracted, and FIG. 6 is a plan view schematically illustrating the liquid crystal layer 13. The OFF state is a state in which an equal voltage (e.g. 0 V) is applied to the second common electrode 22 and pixel electrode 17, and in which no electric field is applied to the liquid crystal layer 13.

In the OFF state, the liquid crystal display device 10 is in a state of black display. Specifically, two polarizers (not illustrated) are arranged in a crossed-Nicol fashion, and linearly polarized light, which has passed through one of the polarizers, is blocked by the other polarizer.

In general, in a panel manufacturing process (conveyance of substrates, attachment of polarizers, etc.), substrates (e.g. glass substrates) have such properties that the substrates are positively charged. FIG. 5 schematically illustrates positive charges ("+" signs in the Figure) with which the TFT substrate 11 and CF substrate 12 are electrified.

In the OFF state, the control circuit 25 applies, for example, 0 V to the second common electrode 22 and pixel electrode 17. Since the first common electrode 20 is electrically connected to the second common electrode 22, the first common electrode 20 is set at the same voltage as the second common electrode 22. At this time, in the region where the hole 23 exists, since the first common electrode 20, to which 0 V is applied, is present, there is no unnecessary charge which is a cause of disturbance of alignment of the liquid crystal layer 13. Thus, in the region where the hole 23 exists, liquid crystal molecules keep the initial state and are vertically aligned. In addition, also in a region where the second common electrode 22 exists, liquid crystal molecules keep the initial state and are vertically aligned. Specifically, in the entire view area 10A, the liquid crystal layer 13 is set in the vertical alignment state.

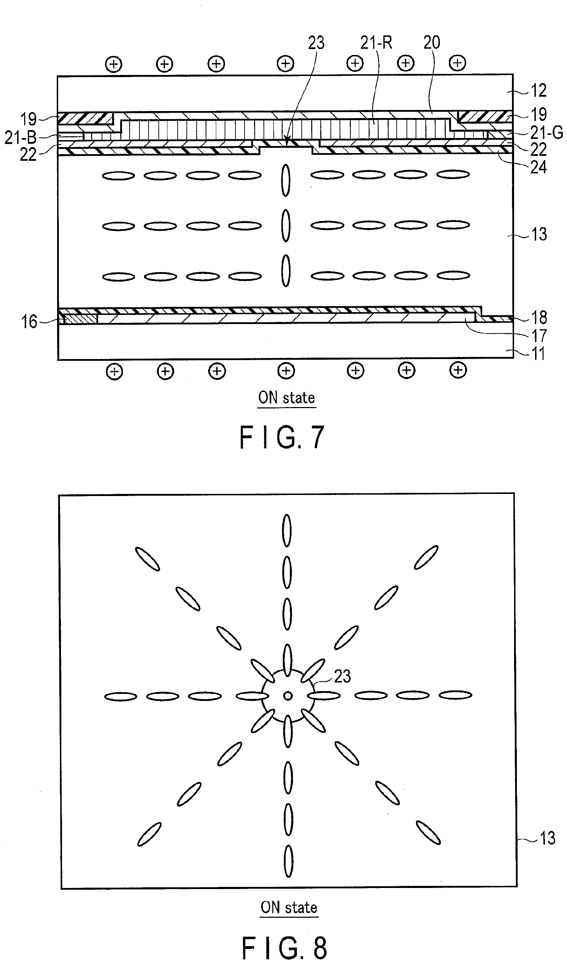

FIG. 7 and FIG. 8 are views for describing the operation of the liquid crystal display device 10 in an ON state. FIG. 7 is a cross-sectional view illustrating one pixel 15 which is extracted, and FIG. 8 is a plan view schematically illustrating the liquid crystal layer 13. The ON state is a state in which different voltages (e.g. 0 V and a positive voltage) are applied to the second common electrode 22 and pixel electrode 17, and in which an electric field is applied to the liquid crystal layer 13. Note that AC voltages are applied to the second common electrode 22 and pixel electrode 17. Specifically, 0 V and a positive voltage are alternately applied at predetermined cycles to the second common electrode 22 and pixel electrode 17.

In the ON state, the liquid crystal display device 10 is, for example, in a state of white display. Actually, color display corresponding to color filters is performed. Specifically, the two polarizers (not illustrated) are arranged in a crossed-Nicol fashion. A predetermined phase difference (X/2) is imparted to linearly polarized light, which has passed through one of the polarizers, in the liquid crystal layer 13, and the light passes through the other polarizer.

In the ON state, the control circuit 25 applies a positive voltage between the second common electrode 22 (and first common electrode 20) and the pixel electrode 17. Specifically, the control circuit 25 applies 0 V to the second common electrode 22 (and first common electrode 20), and applies a positive voltage to the pixel electrode 17. The voltage, which is applied to the second common electrode 22 and pixel electrode 17, is an AC voltage, and a polarity of the voltage is reversed in every predetermined time.

In the ON state, liquid crystal molecules are radially inclined around the hole 23 until the liquid crystal molecules become substantially horizontal. At the center of the hole 23, no electric field is applied, and liquid crystal molecules are substantially vertically aligned. Specifically, the center of the hole 23 becomes the center of alignment of the liquid crystal layer 13 in one pixel 15. Thereby, since the alignment of the liquid crystal layer 13 can be controlled such that the direction of inclination of liquid crystal molecules is different between a plurality of regions, the viewing angle dependency can be decreased.

### [3] Comparative Example

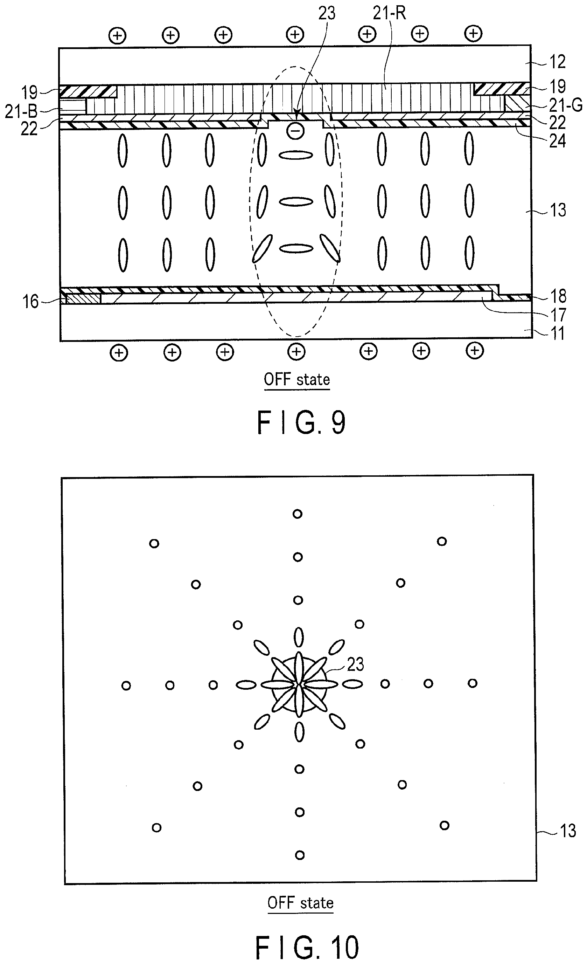

Next, a comparative example will be described. FIG. 9 and FIG. 10 are views for describing an operation of a liquid crystal display device according to a comparative example. FIG. 9 is a cross-sectional view illustrating one pixel 15 which is extracted, and FIG. 10 is a plan view schematically illustrating a liquid crystal layer 13. FIG. 9 and FIG. 10 illustrate the alignment of the liquid crystal layer 13 in an OFF state.

In the comparative example, the first common electrode 20 illustrated in the above-described embodiment is not provided. Specifically, a black matrix 19 and a color filter 21 (red filter 21-R, green filter 21-G and blue filter 21-B) are provided on the CF substrate 12. A common electrode 22 is provided on the color filter 21. Holes 23 are provided in the common electrode 22 in association with pixels, respectively. Like the above-described embodiment, the holes 23 of the comparative example are used in order to control the liquid crystal alignment.

In the comparative example, a common electrode is not provided in the region where the hole 23 exists. Thus, the hole 23 is negatively charged due to the CF substrate 12 that is positively charged. FIG. 9 schematically illustrates a negative charge ("-" sign in the Figure) with which the hole 23 is electrified.

In the OFF state, 0 V is applied to the common electrode 22 and pixel electrode 17. However, since the hole 23 is negatively charged, an electric field is applied to the liquid crystal layer 13 in the region where the hole 23 exists. Thereby, liquid crystal molecules are horizontally aligned. In the region where the hole 23 exists, since light leaks, white display is effected. Also when a low voltage is applied between the common electrode 22 and pixel electrode 17, that is, also when a halftone is displayed, liquid crystal molecules are horizontally aligned in the region where the hole 23 exists, and thus white display is effected.

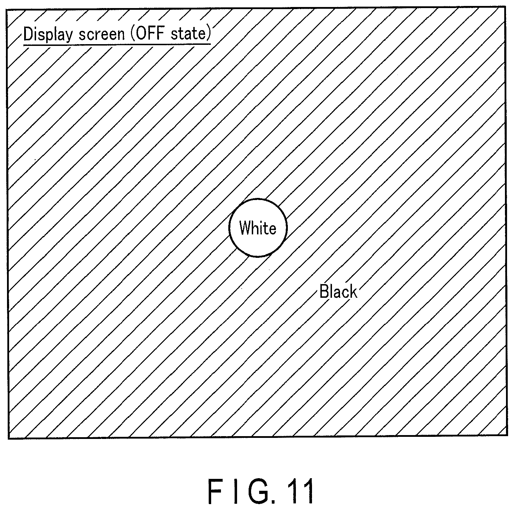

FIG. 11 is a schematic view for describing a state of a display screen of the liquid crystal display device according to the comparative example. In the OFF state, the liquid crystal display device performs black display. In that region of the display screen, where the hole 23 exists, since light leaks, white display is effected. Thus, in the comparative example, since a white dot, which is not intended, is visually recognized in the black display, the display characteristic deteriorates.

By contrast, in the present embodiment, the first common electrode 20 is provided in the region where the hole 23 exists. A voltage, which is equal to the voltage applied to the second common electrode 22, is applied to the first common electrode 20. Thereby, since the hole 23 can be prevented from being negatively charged, black display is effected on the entire display screen. Specifically, it is possible to prevent a white dot from being visually recognized in the black display.

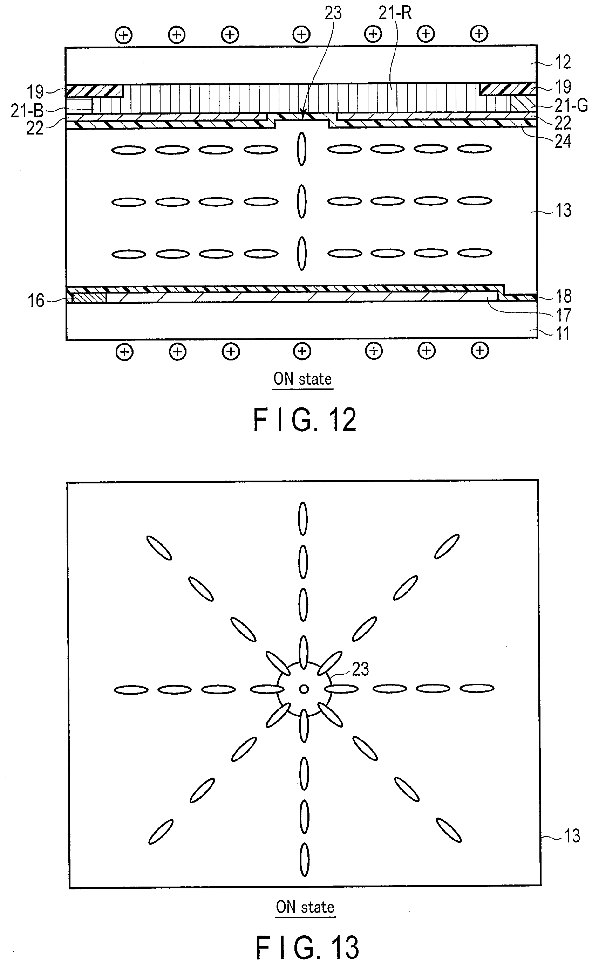

FIG. 12 and FIG. 13 are views for describing an operation of the liquid crystal display device of the comparative example in the ON state. FIG. 12 is a cross-sectional view illustrating one pixel 15 which is extracted, and FIG. 13 is a plan view schematically illustrating the liquid crystal layer 13.

In the ON state, a positive voltage is applied between the common electrode 22 and pixel electrode 17. In the ON state, the liquid crystal display device performs white display.

### [4] Advantageous Effects of the First Embodiment

As has been described above in detail, in the first embodiment, the liquid crystal display device 10 includes the liquid crystal layer 13 filled between the TFT substrate 11 and CF substrate 12; the pixel electrode 17 provided on the TFT substrate 11 in association with the pixel 15; the first common electrode 20 provided on the CF substrate 12; the color filter 21 provided on the first common electrode 20; and the second common electrode 22 provided on the color filter 21. The second common electrode 22 includes the hole 23 which is disposed in such a manner as to overlap the pixel electrode 17, and the second common electrode 22 is electrically connected to the first common electrode 20. In addition, in the OFF state, the voltage of the first common electrode 20 is set to be equal to the voltage of the second common electrode 22.

Thus, according to the first embodiment, even when the TFT substrate 11 and CF substrate 12 are positively charged, it is possible to prevent the hole 23 from being negatively charged. Thereby, in the OFF state and in the black display, the liquid crystal layer 13 is vertically aligned over the entire view area. As a result, the display characteristics of the liquid crystal display device 10 can be improved. Further, the contrast can be enhanced. In particular, in black display, light leakage from the hole 23 can be prevented.

Besides, the first common electrode 20 is formed in the inside of the seal member 14, and the second common electrode 22 is formed up to the outside of the seal member 14. In addition, the seal member 14 is attached to only the second common electrode 22. Thereby, when the TFT substrate 11 and CF substrate 12 are fixed by the seal member 14, it is possible to prevent the adhesivity between the TFT substrate 11 and CF substrate 12 from deteriorating.

Furthermore, the hole 23 is used for alignment division control. For the alignment control, there is also a method of using a protrusion. However, there is a limit to the reduction in size (area) of the protrusion, and it is difficult to reduce the size of the pixel. Since the area of the hole 23 can be made smaller than the area of the protrusion, the pixel can be miniaturized.

Moreover, since the MVA method (alignment division method) can be realized, the viewing angle dependency can be decreased.

### [Second Embodiment]

In the first embodiment, the first common electrode 20 is provided in a planar shape in a manner to cover the view area 10A. In a second embodiment, a plurality of first common electrodes 20, which are formed of lines and spaces, are provided, and the first common electrodes 20 are disposed in a manner to overlap the holes 23.

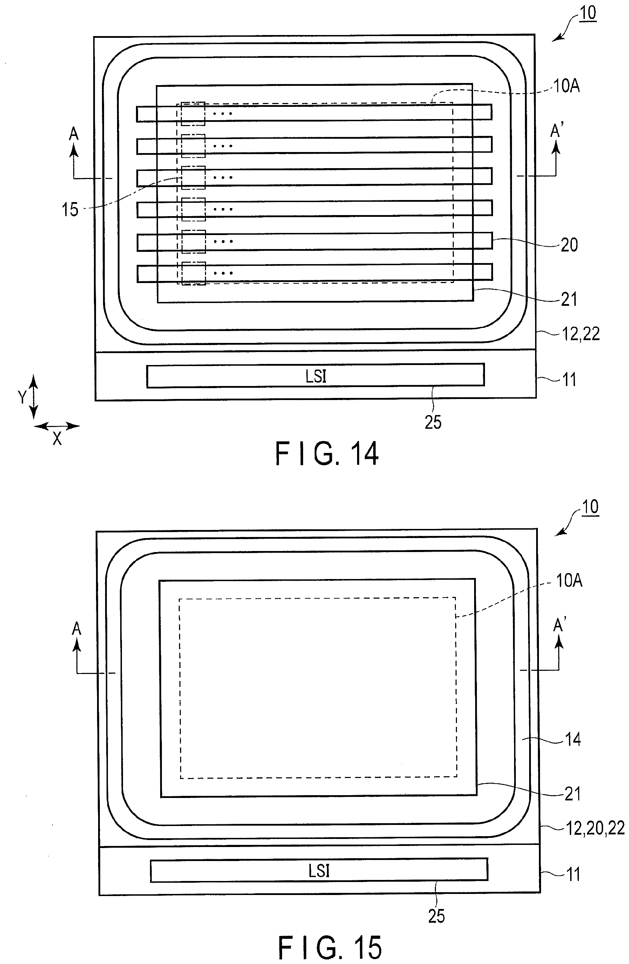

FIG. 14 is a plan view of a liquid crystal display device 10 according to the second embodiment of the present invention. A cross-sectional view of the liquid crystal display device 10 along line A-A' in FIG. 14 is the same as FIG. 2. A pixel array is provided in the view area 10A.

A plurality of first common electrodes (lower common electrodes) 20 are provided on the CF substrate 12 and black matrix 19. The first common electrodes 20 extend in an X direction, and are arranged in a Y direction. The X direction corresponds to a row direction of the pixel array, and the Y direction corresponds to a column direction of the pixel array.

The first common electrodes 20 are provided in association with a plurality of rows of the pixel array. Each first common electrode 20 is disposed in a manner to overlap a pixel line of one row, and is disposed in a manner to overlap the holes 23.

The width (the length in the Y direction) of the first common electrode 20 is greater than the length of the hole 23 in the Y direction. For example, the width of the first common electrode 20 is equal to the length of the pixel 15 in the Y direction, that is, equal to the length of the pixel electrode 17 in the Y direction.

The length (the length in the X direction) of the first common electrode 20 is greater than the length of the view area 10A in the X direction. In the present embodiment, the length of the first common electrode 20 is greater than the length of the color filter 21 in the X direction, and is less than the length of the inside area of the seal member 14 in the X direction.

In the peripheral area 10B, the first common electrodes 20 are in contact with the second common electrode 20, and are electrically connected to the second common electrode 22. Accordingly, the first common electrodes 20 and the second common electrode 22 are set at an equal voltage.

In the OFF state, the control circuit 25 applies, for example, 0 V to the first common electrodes 20, the second common electrode 22 and the pixel electrode 17. In the region where the hole 23 exists, since the first common electrodes 20, to which 0 V is applied, are present, there is no unnecessary charge which is a cause of disturbance of alignment of the liquid crystal layer 13. Thus, in the region where the hole 23 exists, liquid crystal molecules keep the initial state and are vertically aligned. Therefore, black display is realized over the entire view area 10A.

In the second embodiment, too, the same advantageous effects as in the first embodiment can be obtained.

Note that the first common electrodes 20 may be configured such that the first common electrodes 20 extend in the Y direction and are arranged in the X direction. Specifically, the first common electrodes 20 are provided in association with a plurality of columns of the pixel array. In the case of this configuration, too, the same operation as in the second embodiment can be realized.

### [Third Embodiment]

In the first embodiment, the first common electrode 20 is formed on the black matrix 19. However, the order of stacking may be reversed.

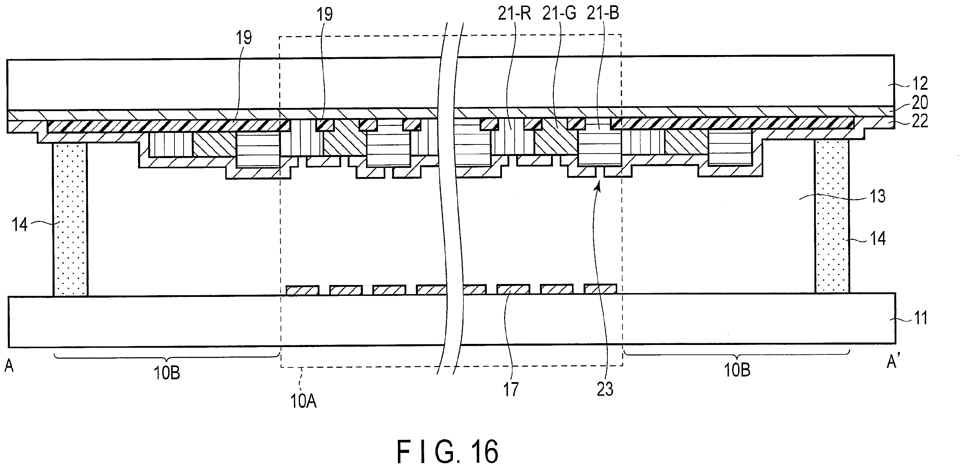

FIG. 15 is a plan view of a liquid crystal display device 10 according to a third embodiment of the present invention. FIG. 16 is a cross-sectional view of the liquid crystal display device 10 along line A-A' in FIG. 15.

A first common electrode 20 is formed in a planar shape on the CF substrate 12. For example, the first common electrode 20 has the same area as the CF substrate 12. A black matrix 19 is provided on the first common electrode 20. A color filter 21 is provided on the black matrix 19 and first common electrode 20.

A second common electrode 22 is provided on the color filter 21. For example, the second common electrode 22 has the same area as the CF substrate 12. In the peripheral area 10B, the second common electrode 22 is in contact with the first common electrode 20, and is electrically connected to the first common electrode 20. As another method of electrically connecting the first common electrode 20 and second common electrode 22, such a method may be adopted that a plurality holes are formed in the black matrix 19 of the peripheral area 10B, and the first common electrode 20 and second common electrode 22 are electrically connected via the holes.

In the third embodiment, too, the same advantageous effects as in the first embodiment can be obtained. Furthermore, the third embodiment can be applied to the second embodiment.

In each of the above embodiments, the first common electrode 20 and second common electrode 22 are electrically connected.

In the present specification, for example, terms such as "parallel", "orthogonal", "vertical" and "identical", values of length and angles, and the like, which specify shapes, geometrical conditions, and degrees thereof, are not limited to their strict meanings, and are interpreted to include such ranges that similar functions can be expected.

The present invention is not limited to the above-mentioned embodiments, and can be reduced to practice by modifying the constituent elements without departing from the scope of the invention. In addition, the above-described embodiments include inventions of various stages, and a variety of inventions can be derived by properly combining structural elements of one embodiment or by properly combining structural elements of different embodiments. For example, if the object of the invention is achieved and the advantages of the invention are attained even after some of the structural elements disclosed in connection with the embodiments are deleted, the structure made up of the resultant structural elements can be extracted as an invention.

## Claims

1. A liquid crystal display device (10) comprising:
first and second substrates (11, 12);
a liquid crystal layer (13) filled between the first and second substrates (11, 12);
a pixel electrode (17) which is provided on the first substrate (11) in such a manner as to correspond to a pixel, and has a rectangular shape;
a first common electrode (20) provided on the second substrate (12);
a color filter (21) provided on the first common electrode (20); and
a second common electrode (22) which is provided on the color filter (21), includes an opening portion (23) disposed in such a manner as to overlap the pixel electrode (17), and is electrically connected to the first common electrode (20), wherein the opening portion (23) entirely overlaps the pixel electrode (17).

2. The liquid crystal display device (10) of Claim 1, wherein
each of the first substrate (11) and the second substrate (12) includes a view area (10A) and a peripheral area (10B) around the view area (10A),
each of the first common electrode (20) and the second common electrode (22) is provided in the view area (10A) and the peripheral area (10B), and
the first common electrode (20) is in contact with the second common electrode (22) in the peripheral area (10B).

3. The liquid crystal display device (10) of Claim 1, further comprising a control circuit (25) configured to apply an equal voltage to the first common electrode (20) and the second common electrode (22).

4. The liquid crystal display device (10) of Claim 1, wherein the opening portion (23) has a shape of a circle, an ellipse, or a rectangle.

5. The liquid crystal display device (10) of Claim 1, wherein the liquid crystal layer (13) includes a liquid crystal material with a negative dielectric anisotropy, and has a vertical alignment.

6. A liquid crystal display device (10) comprising:
first and second substrates (11, 12);
a liquid crystal layer (13) filled between the first and second substrates (11, 12);
a plurality of pixel electrodes (17) which are provided on the first substrate (11) in such a manner as to correspond to a pixel array, and each have a rectangular shape;
a plurality of first common electrodes (20) provided on the second substrate (12) in such a manner as to correspond to a plurality of rows of the pixel array, each of the first common electrodes (20) extending in a first direction;
a color filter (21) provided on the first common electrodes (20); and
a second common electrode (22) which is provided on the color filter (21), includes a plurality of opening portions (23) disposed in such a manner as to overlap the pixel electrodes (17), and is electrically connected to the first common electrodes (20), wherein the opening portions (23) each entirely overlap corresponding one of the pixel electrodes (17).

7. The liquid crystal display device (10) of Claim 6, wherein
each of the first substrate (11) and the second substrate (12) includes a view area (10A) and a peripheral area (10B) around the view area (10A),
each of the first common electrodes (20) and the second common electrode (22) is provided in the view area (10A) and the peripheral area (10B), and
the first common electrodes (20) are in contact with the second common electrode (22) in the peripheral area (10B).

8. The liquid crystal display device (10) of Claim 6, further comprising a control circuit (25) configured to apply an equal voltage to the first common electrodes (20) and the second common electrode (22).

9. The liquid crystal display device (10) of Claim 6, wherein the opening portion (23) has a shape of a circle, an ellipse, or a rectangle.

10. The liquid crystal display device (10) of Claim 6, wherein the liquid crystal layer (13) includes a liquid crystal material with a negative dielectric anisotropy, and has a vertical alignment.

## Patentansprüche

1. Flüssigkristallanzeigevorrichtung (10), umfassend:
erste und zweite Substrate (11, 12);
eine Flüssigkristallschicht (13), die zwischen dem ersten und dem zweiten Substrat (11, 12) eingefüllt ist;
eine Pixelelektrode (17), die auf dem ersten Substrat (11) derart bereitgestellt ist, dass sie einem Pixel entspricht, und die eine rechteckige Form aufweist;
eine erste gemeinsame Elektrode (20), die auf dem zweiten Substrat (12) bereitgestellt ist;
ein Farbfilter (21), das auf der ersten gemeinsamen Elektrode (20) bereitgestellt ist; und
eine zweite gemeinsame Elektrode (22), die auf dem Farbfilter (21) bereitgestellt ist, die einen Öffnungsabschnitt (23) beinhaltet, der derart angeordnet ist, dass er die Pixelelektrode (17) überlappt, und die elektrisch mit der ersten gemeinsamen Elektrode (20) verbunden ist, wobei der Öffnungsabschnitt (23) die Pixelelektrode (17) vollständig überlappt.

2. Flüssigkristallanzeigevorrichtung (10) nach Anspruch 1, wobei
sowohl das erste Substrat (11) als auch das zweite Substrat (12) einen Sichtbereich (10A) und einen Peripheriebereich (10B) um den Sichtbereich (10A) herum beinhaltet,
sowohl die erste gemeinsame Elektrode (20) als auch die zweite gemeinsame Elektrode (22) in dem Sichtbereich (10A) und dem Peripheriebereich (10B) bereitgestellt ist, und
die erste gemeinsame Elektrode (20) mit der zweiten gemeinsamen Elektrode (22) in dem Peripheriebereich (10B) in Kontakt ist.

3. Flüssigkristallanzeigevorrichtung (10) nach Anspruch 1, ferner umfassend eine Steuerschaltung (25), die dazu eingerichtet ist, eine gleiche Spannung an die erste gemeinsame Elektrode (20) und die zweite gemeinsame Elektrode (22) anzulegen.

4. Flüssigkristallanzeigevorrichtung (10) nach Anspruch 1, wobei der Öffnungsabschnitt (23) die Form eines Kreises, einer Ellipse oder eines Rechtecks hat.

5. Flüssigkristallanzeigevorrichtung (10) nach Anspruch 1, wobei die Flüssigkristallschicht (13) ein Flüssigkristallmaterial mit einer negativen dielektrischen Anisotropie beinhaltet und eine vertikale Ausrichtung hat.

6. Flüssigkristallanzeigevorrichtung (10), umfassend:
erste und zweite Substrate (11, 12);
eine Flüssigkristallschicht (13), die zwischen dem ersten und dem zweiten Substrat (11, 12) eingefüllt ist;
eine Vielzahl von Pixelelektroden (17), die auf dem ersten Substrat (11) derart bereitgestellt sind, dass sie einer Pixelanordnung entsprechen, und die jeweils eine rechteckige Form aufweisen;
eine Vielzahl von ersten gemeinsamen Elektroden (20), die auf dem zweiten Substrat (12) derart bereitgestellt sind, dass sie einer Vielzahl von Zeilen des Pixelarrays entsprechen, wobei sich jede der ersten gemeinsamen Elektroden (20) in eine erste Richtung erstreckt;
ein Farbfilter (21), das auf den ersten gemeinsamen Elektroden (20) bereitgestellt ist; und
eine zweite gemeinsame Elektrode (22), die auf dem Farbfilter (21) bereitgestellt ist, die eine Vielzahl von Öffnungsabschnitten (23) beinhaltet, die derart angeordnet sind, dass sie die Pixelelektroden (17) überlappen, und die elektrisch mit den ersten gemeinsamen Elektroden (20) verbunden ist, wobei die Öffnungsabschnitte (23) jeweils eine entsprechende der Pixelelektroden (17) vollständig überlappen.

7. Flüssigkristallanzeigevorrichtung (10) nach Anspruch 6, wobei
sowohl das erste Substrat (11) als auch das zweite Substrat (12) einen Sichtbereich (10A) und einen Peripheriebereich (10B) um den Sichtbereich (10A) herum beinhaltet,
sowohl die ersten gemeinsamen Elektroden (20) als auch die zweite gemeinsame Elektrode (22) in dem Sichtbereich (10A) und dem Peripheriebereich (10B) bereitgestellt sind bzw. ist, und
die ersten gemeinsamen Elektroden (20) mit der zweiten gemeinsamen Elektrode (22) in dem Peripheriebereich (10B) in Kontakt sind.

8. Flüssigkristallanzeigevorrichtung (10) nach Anspruch 6, ferner umfassend eine Steuerschaltung (25), die dazu eingerichtet ist, eine gleiche Spannung an die ersten gemeinsamen Elektroden (20) und die zweite gemeinsame Elektrode (22) anzulegen.

9. Flüssigkristallanzeigevorrichtung (10) nach Anspruch 6, wobei der Öffnungsabschnitt (23) die Form eines Kreises, einer Ellipse oder eines Rechtecks hat.

10. Flüssigkristallanzeigevorrichtung (10) nach Anspruch 6, wobei die Flüssigkristallschicht (13) ein Flüssigkristallmaterial mit einer negativen dielektrischen Anisotropie beinhaltet und eine vertikale Ausrichtung hat.

## Revendications

1. Dispositif d'affichage à cristaux liquides (10) comprenant :
des premier et deuxième substrats (11, 12) ;
une couche de cristaux liquides (13) intercalée entre les premier et deuxième substrats (11, 12) ;
une électrode de pixel (17) qui est disposée sur le premier substrat (11) de manière à correspondre à un pixel, et a une forme rectangulaire ;
une première électrode commune (20) disposée sur le deuxième substrat (12) ;
un filtre coloré (21) disposé sur la première électrode commune (20) ; et
une deuxième électrode commune (22) qui est disposée sur le filtre coloré (21), comporte une partie d'ouverture (23) disposée de manière à chevaucher l'électrode de pixel (17), et est reliée électriquement à la première électrode commune (20), dans lequel la partie d'ouverture (23) chevauche entièrement l'électrode de pixel (17).

2. Dispositif d'affichage à cristaux liquides (10) de la revendication 1, dans lequel
le premier substrat (11) et le deuxième substrat (12) comportent chacun une zone de visualisation (10A) et une zone périphérique (10B) autour de la zone de visualisation (10A),
la première électrode commune (20) et la deuxième électrode commune (22) sont chacune disposées dans la zone de visualisation (10A) et la zone périphérique (10B), et
la première électrode commune (20) est en contact avec la deuxième électrode commune (22) dans la zone périphérique (10B).

3. Dispositif d'affichage à cristaux liquides (10) de la revendication 1, comprenant en outre un circuit de commande (25) configuré pour appliquer une tension identique à la première électrode commune (20) et la deuxième électrode commune (22).

4. Dispositif d'affichage à cristaux liquides (10) de la revendication 1, dans lequel la partie d'ouverture (23) a la forme d'un cercle, d'une ellipse, ou d'un rectangle.

5. Dispositif d'affichage à cristaux liquides (10) de la revendication 1, dans lequel la couche de cristaux liquides (13) comporte un matériau à cristaux liquides avec une anisotropie diélectrique négative, et a un alignement vertical.

6. Dispositif d'affichage à cristaux liquides (10) comprenant :
des premier et deuxième substrats (11, 12) ;
une couche de cristaux liquides (13) intercalée entre les premier et deuxième substrats (11, 12) ;
une pluralité d'électrodes de pixel (17) qui sont disposées sur le premier substrat (11) de manière à correspondre à une matrice de pixels, et ont chacun une forme rectangulaire ;
une pluralité de premières électrodes communes (20) disposées sur le deuxième substrat (12) de manière à correspondre à une pluralité de rangées de la matrice de pixels, chacune des premières électrodes communes (20) s'étendant dans une première direction ;
un filtre coloré (21) disposé sur les premières électrodes communes (20) ; et
une deuxième électrode commune (22) qui est disposée sur le filtre coloré (21), comporte une pluralité de parties d'ouverture (23) disposées de manière à chevaucher les électrodes de pixel (17), et est reliée électriquement aux premières électrodes communes (20), dans lequel les parties d'ouverture (23) chevauchent chacune entièrement l'une correspondante des électrodes de pixel (17).

7. Dispositif d'affichage à cristaux liquides (10) de la revendication 6, dans lequel
le premier substrat (11) et le deuxième substrat (12) comportent chacun une zone de visualisation (10A) et une zone périphérique (10B) autour de la zone de visualisation (10A),
les premières électrodes communes (20) et la deuxième électrode commune (22) sont chacune disposées dans la zone de visualisation (10A) et la zone périphérique (10B), et
les premières électrodes communes (20) sont en contact avec la deuxième électrode commune (22) dans la zone périphérique (10B).

8. Dispositif d'affichage à cristaux liquides (10) de la revendication 6, comprenant en outre un circuit de commande (25) configuré pour appliquer une tension identique aux premières électrodes communes (20) et à la deuxième électrode commune (22).

9. Dispositif d'affichage à cristaux liquides (10) de la revendication 6, dans lequel la partie d'ouverture (23) a la forme d'un cercle, d'une ellipse, ou d'un rectangle.

10. Dispositif d'affichage à cristaux liquides (10) de la revendication 6, dans lequel la couche de cristaux liquides (13) comporte un matériau à cristaux liquides avec une anisotropie diélectrique négative, et a un alignement vertical.
